# EUROPÄISCHE PATENTSCHRIFT

(11) **EP 4 513 513 B1**
(45) Veröffentlichungstag und Bekanntmachung des Hinweises auf die Patenterteilung: **05.11.2025**
(21) Anmeldenummer: 24194736.5
(22) Anmeldetag: 15.08.2024
(51) Int. Cl.: G21K 1/00

(54) **IONENFALLE**
ION TRAP
PIÈGE IONIQUE

(30) Priorität: 24.08.2023 DE 102023122682
(43) Veröffentlichungstag der Anmeldung: 26.02.2025
(73) Patentinhaber: Physikalisch-Technische Bundesanstalt Braunschweig und Berlin, 38116 Braunschweig (DE)
(72) Erfinder: MEHLSTÄUBLER, Prof. Dr. Tanja, 38176 Bortfeld (DE); JORDAN, Dr. Elena, 38118 Braunschweig (DE)
(74) Vertreter: Gramm, Lins & Partner Patent- und Rechtsanwälte PartGmbB

(56) Entgegenhaltungen:
- BLAKESTAD R B ET AL: "Improved high-fidelity transport of trapped-ion qubits through a multi-dimensional array", ARXIV.ORG, CORNELL UNIVERSITY LIBRARY, 201 OLIN LIBRARY CORNELL UNIVERSITY ITHACA, NY 14853, 24 June 2011 (2011-06-24), XP080511294, DOI: 10.1103/PHYSREVA.84.032314
- GUIDO WILPERS ET AL: "A monolithic array of three-dimensional ion traps fabricated with conventional semiconductor technology", NATURE NANOTECHNOLOGY, vol. 7, no. 9, 22 July 2012 (2012-07-22), London, pages 572 - 576, XP055486404, ISSN: 1748-3387, DOI: 10.1038/nnano.2012.126

## Beschreibung

Die Erfindung betrifft eine Ionenfalle. Ionenfallen werden bereits erfolgreich beispielsweise in Quantencomputern, Quantensimulatoren, Atomuhren und Quantensensoren eingesetzt. Ionenfallen sind, wie die erfindungsgemäße Ionenfalle, in der Regel als Paulfallen aufgebaut, bei denen zumindest ein geladenes Teilchen mit Hilfe eines Quadropol-Radiofrequenzfeldes radial eingeschlossen wird. In linearen Paulfallen, auf die sich die Erfindung ebenfalls bezieht, sind zusätzliche Elektroden vorgesehen, mittels derer durch Anlegen von Gleichspannungen Ionen entlang einer Längsachse eingeschlossen werden können. Chipbasierte Ionenfallen, auf die sich die Erfindung bezieht, lassen sich gleichzeitig effizient und mit hoher Präzision herstellen.

Es ist bekannt, chipbasierte Ionenfallen aus vier oder aus zwei Mikrochips aufzubauen.

Die DE 10 2019 205183 A1 beschreibt ein Verfahren zum Herstellen einer Ionenfalle bei dem zwei Substrate verwendet werden, auf denen zumindest ein Isolationsbereich und jeweils eine Metallisierung aufgebracht werden. Auf aufeinander zugewandte Seiten der Substrate werden Bondflächen ausgebildet und so die Substrate miteinander verbunden. In einem Substrat wird eine durchgängige Ausnehmung ausgebildet, in deren Bereich die Isolation entfernt wird. Auf diese Weise können dreidimensionale Ionenfallen mit geringer HF-Absorption aufgebaut werden.

Die US 2010 / 0 084 549 A1 beschreibt eine elektrostatische Ionenfalle für Ionen mit verschiedenen Masse-Ladungs-Verhältnissen und verschiedenen kinetischen Energien in einem anharmonischen Potentialtopf. Die Ionenfalle regt die eingeschlossenen Ionen mittels eines Wechselstromantriebs mit kleiner Amplitude an. Die masseabhängigen Schwingungsamplituden der angeregten Ionen werden aufgrund einer Autoresonanz zwischen der AC-Antriebsfrequenz und den Eigenschwingungsfrequenzen der Ionen mit zunehmender Energie vergrößert, bis die Schwingungsamplituden der Ionen die physikalischen Abmessungen der Falle überschreiten oder die Ionen fragmentieren oder einer anderen physikalischen oder chemischen Umwandlung unterliegen.

US 2017 / 0 221693 A1 beschreibt eine Ionenfalle mit zwei stabförmigen RF-Elektroden, zwei Gleichstromelektroden und einem Laserdurchgang zur Ioneneinfangzone. Die RF-Elektroden sind in Längsrichtung der Ionenfalle parallel angeordnet, eine auf der Oberseite der ersten Seite und eine auf der Unterseite der ersten Seite angeordnet. Eine Gleichstromelektrode ist auf der Oberseite der zweiten Seite angeordnet und die zweite HF-Elektrodenschiene ist auf der Unterseite der zweiten Seite angeordnet. Ein Laserdurchgang verläuft von der Außenseite der ersten oder zweiten Seite des Substrats zur Ioneneinfangzone. So wird ein Laserpfad gebildet, der eine Ioneneinfangstruktur durchdringt, sodass weniger Laser notwendig sind, um die Ionen einzufangen und zu kühlen.

Der Artikel von S. Auchter et al. "Industrially microfabricated ion trap with 1 eV trap depth." Quantum Science and Technology 7 (2022) 035015 beschreibt eine Ionenfalle, die auf gestapelten Acht-Zoll-Wafern hergestellt wird. Die Elektroden werden auf den Oberflächen von zwei gegenüberliegenden Wafern strukturiert, die mit einem Abstandshalter verbunden sind, Sie bilden eine 3D-Struktur mit einem Ausrichtungsfehler über den Stapel mit einer Standardabweichung von 2,5 pm.

Der Artikel von C. Decaroli, et al. "Design, fabrication and characterization of a microfabricated stacked-wafer segmented ion trap with two X-junctions." Quantum Science and Technology 6 (2021) 044001 beschreibt eine dreidimensionale Paul-Ionenfalle, die aus einem Stapel präzisionsgefertigter Siliziumdioxid-Glasscheiben hergestellt ist und ein Paar von Verbindungen für den zweidimensionalen Ionentransport enthält. Die Ionenfalle verfügt über eine Vielzahl von Elektroden, mittels derer mehrere Potenzialtöpfe aufgebaut werden.

Der Artikel von Dong-Il Cho, et al. "A review of silicon microfabricated ion traps for quantum information processing." Micro and Nano Systems Letters (2015) 3:2, S. 1 - 12 gibt einen Überblick über Ionenfallen, die sowohl durch konventionelle Präzisionsbearbeitung als auch durch MEMS-basierte Mikrofabrikation hergestellt werden können und beschreibt eine gattungsgemäße Ionenfalle. Anschließend werden die Mikrofertigungsmethoden für Ionenfallen im Detail erläutert.

Der Artikel "Improved high-fidelity transport of trapped-ion qubits through a multidimensional array" von R.B. Blakestad et al, ARXIV.ORG, CORNELL UNIVERSITY LIBRARY, 201, Online Library Cornell University Ithaca, NY 14853, 24. Juni 2011 (2011-06-24), XP080511294, DOI: 10.1103/PHYSREVA.84.032314 beschreibt eine Paul-Falle mit 46 Elektroden, mittels der Beryllium-Ionen entlang eines Pfads transportiert werden kann, der eine x-förmige Kreuzung aufweist.

Der Artikel von Guido Wilpers et al "A monolithic array 1-12of three-dimensional ion,traps fabricated with conventional semiconductor technology", nature nanotechnology Bd. 7. Nr. 9. 22. Juli 2012 (2012-07-22), Seiten 572-576, XP055486404, London, ISSN: 1748-3387. DOI:10.1038/nnano.2012.126, beschreibt eine Paul-Falle aus zungenförmigen Abschnitten auf zwei parallel zueinander angeordneten Chips.

Der Erfindung liegt die Aufgabe zugrunde, eine verbesserte Ionenfalle vorzuschlagen.

Die Erfindung löst das Problem durch eine Ionenfalle mit den Merkmalen von Anspruch 1.

Vorteilhaft im Vergleich zu Ionenfallen aus vier Chips ist, dass die Herstellung einfacher ist. Insbesondere ist das Ausrichten von Zweitchip zueinander einfacher als von vier Chips zueinander.

Es ist günstig, wenn der erste Chip und der zweite Chip hinsichtlich der in den Ansprüchen genannten Objekte baugleich sind. In anderen Worten ist es möglich, dass die beiden Chips sich in anderen Teilen unterschiedlich aufgebaut sind. Besonders günstig ist es jedoch, wenn die beiden Chips baugleich sind.

Vorteilhaft ist zudem, dass die erste Kompensationselektrode und die zweite Kompensationselektrode so angeordnet werden können, dass meistens eine im Vergleich zu Ionenfallen aus dem Stand der Technik geringerer Spannung angelegt werden muss, um im Fallenvolumen die gleiche elektrische Feldstärke zu erzielen. In anderen Worten ist dann der Durchgriff verbessert.

Günstig ist zudem, dass die Anordnung der Gleichspannungselektroden und der Kompensationselektrode auf gegenüberliegenden Seiten des gleichen Chips der Regel zu einem geringeren Einstreuen der Hochfrequenzspannung, die an den Hochfrequenzelektroden anliegt, führt.

Günstig ist zudem, dass beide Chips auf ihrer jeweiligen Vorder- und Rückseite mit unterschiedlichen Potenzialen belegbar sind.

Zudem ist ein Winkelbereich, unter dem Photonen detektiert werden können, die von einem Ion, das sich im Fallenvolumen aufhält, emittiert werden, vergleichsweise groß wählbar.

Im Rahmen der vorliegenden Beschreibung beziehen sich die Begriffe der Frontseite und der Rückseite jeweils auf die gleiche Raumrichtung. In anderen Worten zeigt die Erstchip-Frontseite in die gleiche Richtung wie die Zweitchip-Frontseite. Entsprechend weist die Erstchip-Rückseite in die gleiche Richtung wie die Zweitchip-Rückseite. In anderen Worten verlaufen die Normalen auf die entsprechenden Seiten in die gleiche Richtung.

Insbesondere sind die Hochfrequenzelektroden so angeordnet, dass sich durch Anlegen einer geeigneten Hochfrequenzspannung ein Fallenvolumen zum Speicher eines Ions bildet.

Die Elektroden können beispielsweise als Metallisierungen auf einem Substrat ausgebildet sein.

Das Substrat ist insbesondere ein Nichtleiter oder Halbleiter, beispielsweise Aluminiumnitrid oder Saphir. Eine Substrat-Dicke des Substrats beträgt vorzugsweise 150 µm bis 1500 µm. Eine geeignete Substrat-Dicke sind 400 ± 50 µm. Die Substrat-Dicke ist der Abstand einer Ausgleichsebene durch die Erstchip-Frontseite von einer Ausgleichsebene durch die Erstchip-Rückseite.

Unter dem Merkmal, dass der zweite Chip so am ersten Chip befestigt ist, dass in senkrechter Projektion auf die Erstchip-Ebene E₁₂ ein Schlitz der Ionenfalle entsteht, wird insbesondere verstanden, dass der Erstchip-Schlitz und der Zweitchip-Schlitz einander so überlagern, dass der Schlitz entsteht. Der Schlitz ist ein materialfreier Bereich der Ionenfalle, wohingegen der Erstchip-Schlitz ein materialfreier Bereich des ersten Chips ist und der Zweitchip-Schlitz ein materialfreier Bereich des zweiten Chips ist.

Es ist möglich und bevorzugt, nicht aber notwendig, dass sich der Erstchip-Schlitz und der Zweitchip-Schlitz zumindest im Wesentlichen komplett überlagern. Hierunter wird insbesondere verstanden, dass die senkrechte Projektion des Erstchip-Schlitzes auf die Erstchip-Ebene der senkrechten Projektion des Zweitchip-Schlitzes auf die Erstchip-Ebene zumindest im Wesentlichen entspricht.

Unter dem Merkmal, dass die Projektion einander zumindest im Wesentlichen entsprechen, wird insbesondere verstanden, dass es zwar möglich und vorteilhaft, nicht aber notwendig ist, dass die Projektionen im mathematischen Sinne zumindest im Wesentlichen gleich sind. Insbesondere ist es möglich, dass die beiden Projektionen voneinander abweichen, beispielsweise um höchstens 20 %, insbesondere höchstens 15 %, insbesondere höchstens 10 %, insbesondere höchstens 5 %, der Schlitz-Fläche. Die Schlitz-Fläche ist die Fläche des Schlitzes. Je besser die Projektionen einander entsprechen, desto besser ist dies in der Regel. Abweichung von einer Gleichheit im mathematischen Sinne sind in der Regel unvermeidlich, aber tolerabel, solange sie die Funktionsfähigkeit der Ionenfalle nicht zu stark beeinflussen.

Unter den Uferseiten werden die voneinander durch den Schlitz getrennten, gegenüberliegenden Bereiche verstanden. Statt Uferseiten kann auch nur von Seiten gesprochen werden.

Unter dem Merkmal, dass die erste Gleichspannungselektroden zum Anlegen einer ersten Gleichspannung ausgebildet ist und die zweite Gleichspannungselektrode zum Anlegen einer zweiten Gleichspannung ausgebildet ist, wird insbesondere verstanden, dass die Gleichspannungselektroden so angeordnet sind, dass durch Anlegen geeigneter Gleichspannungen Ionen im Fallenvolumen gefangen und gehalten werden können, wenn eine geeignete Hochfrequenzspannung an den Hochfrequenzelektroden anliegt.

Unter dem Merkmal, dass die Kompensationselektrode zum Anlegen einer zweiten bzw. vierten Gleichspannung ausgebildet sind, wird insbesondere verstanden, dass die Kompensationselektroden so angeordnet sind, dass durch Anlegen der zweiten bzw. der vierten Gleichspannung Steufelder im Fallenvolumen kompensiert werden können, so dass die Ionen in ein Minimum des Hochfrequenzfeldes verschoben werden können.

Unter einer Hochfrequenzspannung wird eine Spannung verstanden, deren Frequenz zumindest 300 kHz, insbesondere zumindest 500 kHz, beträgt.

Unter einer Gleichspannung wird insbesondere eine Spannung verstanden, deren Spektrum ein Maximum hat, das nicht oberhalb von 10 MHz liegt. Die Spannung wird als Gleichspannung bezeichnet, weil - anders als bei der Hochfrequenzelektrode - keine kontinuierliche hochfrequente Wechselspannung angelegt werden muss, damit die Ionenfalle funktioniert. Zum schnellen Bewegen des Ions, was auch shuttling genannt wird, können aber durchaus Schaltfrequenzen bis in den Megahertzbereich angelegt werden.

Gemäß einer bevorzugten Ausführungsform weist das Erstchip-Segment an einer benachbart zum Erstchip-Schlitz liegenden, quer zur Erstchip-Ebene verlaufenden Kantenfläche einen Rücksprung auf. Vorzugsweise verläuft ein Isolierstreifen zwischen der ersten Gleichspannung Elektrode und der ersten Kompensationselektrode im Bereich des Rücksprungs. Auf diese Weise kann der Isolierstreifen hinreichend bereit ausgelegt werden, um eine sichere elektrische Isolation sicherzustellen. Zudem ist eine vergleichsweise kleine Spannung an der ersten Kompensationselektrode ausreichend, um ein hinreichend starkes elektrisches Feld im Fallenvolumen zum Verschieben des zumindest einen Ions zu erzeugen.

Günstig ist es, wenn die erste Kompensationselektrode einen Erstelektroden-Rücksprungabschnitt hat, der entlang der Erstchip-Ebene verläuft und von der Erstchip-Rückseite um weniger als die Substrat-Dicke beabstandet ist. Der Erstelektroden-Rücksprungabschnitt verläuft insbesondere auf der Erstchip-Frontseite. Der Bereich des Rücksprungs wird für die Bestimmung der Ausgleichsebene durch die Erstchip-Frontseite und/oder durch die Erstchip-Rückseite nicht berücksichtigt. Im Erstelektroden-Rücksprungabschnitt ist der Abstand der ersten Kompensationselektrode vom Fallenvolumen kleiner als er es ohne Rücksprung wäre. Das vergrößert den sogenannten Durchgriff, also das Verhältnis von elektrischer Feldstärke im Fallenvolumen zur an die Gleichspannungselektrode angelegten Spannung.

Günstig ist zudem, wenn die erste Kompensationselektrode in einem Abschnitt quer zur Erstchip-Ebene (und damit entlang der Normalen-Richtung auf die Erstchip-Ebene) verläuft. Vorzugsweise verbindet dieser Abschnitt den Erstelektroden-Rücksprungabschnitt mit einem Haupt-Abschnitt der ersten Kompensationselektrode.

Günstig ist es, wenn ein Abstand h₀ zwischen dem Erstelektroden-Rücksprungabschnitt und der Rückseite des ersten Chips höchstens dem 0,75-fachen, insbesondere höchstens dem 0,5-fachen, der Substrat-Dicke des Chips entspricht. Die Substrat-Dicke entspricht in der Regel der Dicke des Chips abzüglich der Dicke der Elektroden. Da es sich bei diesen oft um Metallisierungen handelt, die sehr dünnen ausgebildet sein können, entspricht die Substrat-Dicke meist in guter Näherung der Chip-Dicke

Günstig ist es, wenn die zweite Kompensationselektrode einen zweiten Elektroden-Rücksprungabschnitt hat, der entlang der Zweitchip-Ebene verläuft und von der Zweitchip-Vorderseite um weniger als die Substrat-Dicke beabstandet ist. Der Bereich des Rücksprungs wird für die Bestimmung der Ausgleichsebene durch die Zweitchip-Frontseite und/oder durch die Zweitchip-Rückseite nicht berücksichtigt. Im zweiten Elektroden-Rücksprungabschnitt ist der Abstand der zweiten Kompensationselektrode vom Fallenvolumen kleiner als er es ohne Rücksprung wäre.

Günstig ist zudem, wenn die zweite Kompensationselektrode in einem Abschnitt quer zur Zweitchip-Ebene, auf (und damit entlang der Normalen-Richtung auf die Zweitchip-Ebene) verläuft. Vorzugsweise verbindet dieser Abschnitt den zweiten Elektroden-Rücksprungabschnitt mit einem Haupt-Abschnitt der zweiten Elektrode.

Vorzugsweise ist das Erstchip-Segment zungenförmig und erstreckt sich in einer Segment-Erstreckungsrichtung, die quer zu einer Schlitz-Erstreckungsrichtung des ersten Schlitzes verläuft.

Alternativ oder zusätzlich ist das Zweitchip-Segment zungenförmig und erstreckt sich in einer Segment-Erstreckungsrichtung, die quer zur Schlitz-Erstreckungsrichtung des zweiten Schlitzes verläuft.

Vorzugsweise ist der Rücksprung so ausgebildet, dass die zweite Elektrode vom Fallenvolumen ausgesehen von der ersten Elektrode verdeckt ist.

Vorzugsweise ist der Isolierstreifen zwischen der ersten Gleichspannungselektrode und der ersten Kompensationselektrode vom Fallenvolumen ausgesehen von der ersten Gleichspannungselektrode verdeckt. Etwaig auf dem Isolierstreifen vorhandene elektrische Ladungen werden dadurch von der ersten Gleichspannungselektrode abgeschirmt. Es sei darauf hingewiesen, dass der Isolierstreifen vorzugsweise nicht durch Aufbringen eines Materials auf das Substrat gebildet ist, obwohl dies von der Erfindung umfasst ist. Insbesondere ist der Isolierstreifen ein Streifen, der keine Metallisierungen aufweist und zwischen der ersten Gleichspannungselektrode und der ersten Kompensationselektrode verläuft.

Günstig ist es, wenn der Sinus des halben Öffnungswinkels eines Kegels, dessen Spitze im Zentrum des Fallenvolumens liegt und der die Ionenfalle nicht schneidet, zumindest 0,45, insbesondere zumindest 0,5, beträgt. Insbesondere beträgt die numerische Apertur NA zumindest 0,45. Erreichbar ist eine numerische Apertur von 0,71.

Vorzugsweise weicht ein lichter Chip-Abstand d₁ der beiden Chips voneinander um höchstens 15% von einer Erst-Schlitzbreite d₂ des Erstchip-Schlitzes ab. Alternativ oder zusätzlich weicht die Zweit-Schlitzbreite d₃ des Zweitchip-Schlitzes vorzugsweise um höchstens 15 % vom lichten Chip-Abstand ab. Je kleiner die Abweichung, desto symmetrischer ist der Aufbau und desto effizienter können Ionen in der Ionenfalle gefangen und gehalten werden. Vorzugsweise entspricht die Zweit-Schlitzbreite d₃ der Erst-Schlitzbreite d₂.

Vorzugsweise weist der erste Chip zumindest ein zweites Erstchip-Segment auf, das bezüglich einer Schlitz-Erstreckungsrichtung neben dem ersten Erstchip-Segment ausgebildet ist und wie das erste Erstchip-Segment aufgebaut ist. Vorzugsweise weist der erste Chip zumindest drei solcher Segmente auf. Auf diese Weise kann eine Ionenfalle für zwei oder mehr Ionen gebaut werden.

Erfindungsgemäß ist zudem ein Ionenfallen System mit (a) zumindest einer erfindungsgemäßen Ionenfalle und (b) einer Steuereinheit, die (i) elektrisch mit den Elektroden verbunden ist und (ii) ausgebildet ist zum automatischen Anlegen einer Hochfrequenzspannung an die Hochfrequenzelektrode, sodass sich das Fallenvolumen bildet, und jeweils einer vorgegebenen Gleichspannung an jede Gleichspannungselektrode und Kompensationselektrode.

Vorzugsweise ist die Steuereinheit zudem ausgebildet zum Anlegen einer zeitlich veränderlichen Gleichspannung, sodass im Fallenvolumen gespeicherte Ionen verschoben werden.

Vorzugsweise besitzt das Ionenfallen System einen Fotodetektor, der angeordnet ist zum Erfassen von Licht, das vom zumindest einem im Fallenvolumen angeordneten Ion emittiert wird.

Im Folgenden wird die Erfindung anhand der beigefügten Zeichnungen erläutert. Es zeigt
- Figur 1a: eine Querschnittsansicht durch eine erfindungsgemäße Ionenfalle,
- Figur 1b: eine Draufsicht auf die erfindungsgemäße Ionenfalle gemäß Figur 1a und
- Figur 2: den zweiten Chip der Ionenfalle gemäß Figur 1a.

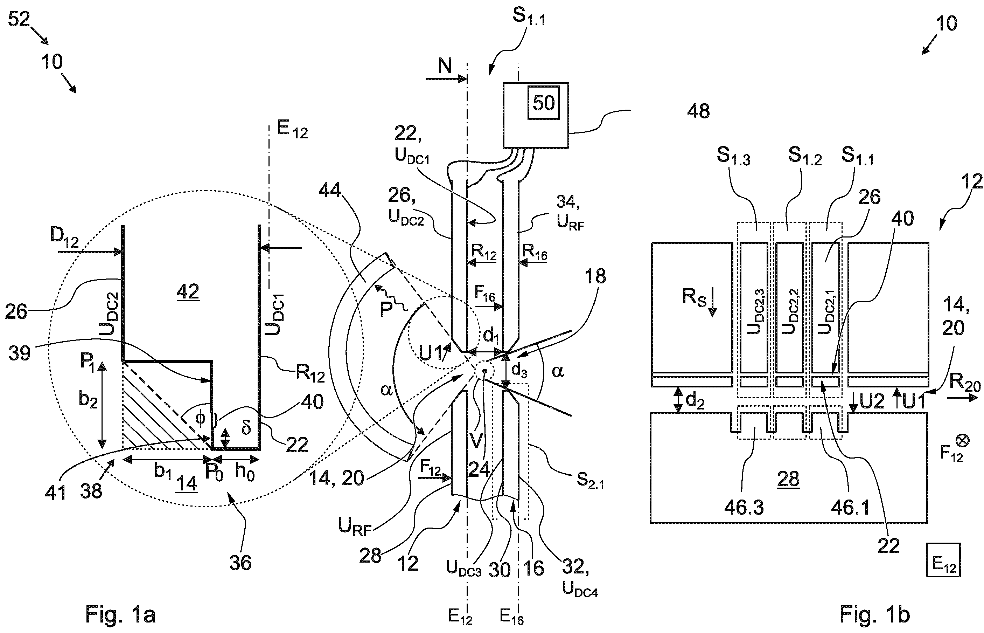

Figur 1a zeigt eine Ionenfalle 10, die einem ersten Chip 12, der eine Erstchip-Frontseite F₁₂ und eine Erstchip-Rückseite R₁₂ hat und einen Erstchip-Schlitz 14 aufweist. Die Ionenfalle 10 hat zudem einen zweiten Chip 16, der eine Zweitchip-Frontseite F₁₆ und eine Zweitchip-Rückseite R₁₆ hat und einen Zweitchip-Schlitz 18 aufweist. Der zweite Chip 16 ist so am ersten Chip 12 befestigt ist, dass in senkrechter Projektion auf eine Erstchip-Ebene E₁₂, entlang der sich der erste Chip12 erstreckt, ein Schlitz 20 der Ionenfalle 10 entsteht.

Der erste Chip 12 weist ein Erstchip-Segment S_{1.1} auf, in dem der erste Chip 12 eine erste Gleichspannungselektrode 22 hat, die zumindest auch auf der Erstchip-Rückseite R₁₂ angeordnet ist und sich abschnittsweise entlang der Erstchip-Ebene E₁₂ erstreckt. Im Betrieb liegt an der ersten Gleichspannungselektrode 22 eine erste Gleichspannung U_{DC1,1} an, die dem Einfangen eines Ions 24 in einem Fallenvolumen V dient.

Die erste Gleichspannungselektrode 22 ist auf einer ersten Uferseite U1 bezüglich des Erstchip-Schlitzes 14 angeordnet ist und an den Schlitz 20 angrenzt. Im Erstchip-Segment S1.1 besitzt der erste Chip 12 eine erste Kompensationselektrode 26, die auf der Erstchip-Frontseite F₁₂ angeordnet ist, sich entlang der Erstchip-Ebene E₁₂ erstreckt und auf der ersten Uferseite U1 bezüglich des Erstchip-Schlitzes 14 angeordnet ist.

Im Betrieb der Ionenfalle 10 liegt an der ersten Kompensationselektrode 26 eine zweite Gleichspannung U_{DC2,1} an, mittels derer das Ion 24 entlang einer Schlitz-Erstreckungsrichtung entlang einer Kombination von d2 +d1 verschoben werden kann.

Der erste Chip 12 besitzt eine Erstchip-Hochfrequenzelektrode 28, die auf zweiten Uferseite U2 angeordnet ist, die der ersten Uferseite U1 bezüglich des Schlitzes 20 gegenüberliegt. Die Erstchip-Hochfrequenzelektrode 28 liegt damit gegenüber der ersten Gleichspannungselektrode 22 und der ersten Kompensationselektrode 26. Im Betrieb liegt an der Erstchip-Hochfrequenzelektrode 28 eine Hochfrequenzspannung U_{RF} an.

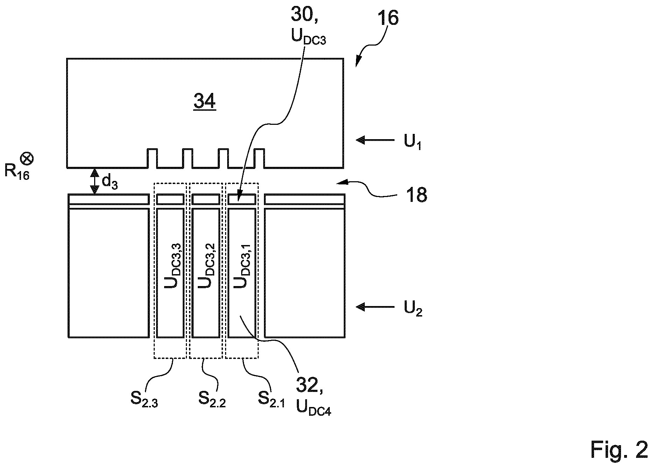

Der zweite Chip 16 besitzt ein Zweitchip-Segment S2.1 (siehe Figur 2), das in Richtung einer Normalen N auf die Erstchip-Ebene E₁₂ hinter der Erstchip-Hochfrequenzelektrode 28 liegt. Der zweite Chip 16 hat eine zweite Gleichspannungselektrode 30, die auf der Zweitchip-Frontseite F₁₆ angeordnet ist und sich abschnittsweise entlang einer Zweitchip-Ebene E₁₆ erstreckt. Im Betrieb der Ionenfalle 10 liegt an der zweiten Gleichspannungselektrode 30 eine dritten Gleichspannung U_{DC3,1} an, mittels der das Ion 24 im Fallenvolumen V gehalten wird.

Der zweite Chip 16 hat zudem eine zweite Kompensationselektrode 32, die auf der Zweitchip-Rückseite R₁₆ angeordnet ist und sich überwiegend entlang einer Zweitchip-Ebene E₁₆ erstreckt. Im Betrieb der Ionenfalle 10 liegt an der zweiten Kompensationselektrode 32 eine vierte Gleichspannung U_{DC4,1} an.

Der zweite Chip 16 hat zudem eine Zweitchip-Hochfrequenzelektrode 34, die in Richtung der Normalen N hinter dem Erstchip-Segment S1.1 liegt. Die Kompensationselektroden 26, 32 gegeneinander elektrisch isoliert. Entsprechend sind die Gleichspannungselektrode 22, 30 gegeneinander elektrisch isoliert.

Die Vergrößerung in Figur 1a zeigt, dass das Erstchip-Segment S1.1an einer benachbart zum Erstchip-Schlitz 14 liegenden, quer zur Erstchip-Ebene E₁₂ verlaufenden Kantenfläche 36 einen Rücksprung 38 aufweist.

Die erste Kompensationselektrode 26 hat einen Erstelektroden-Rücksprungabschnitt 39, der entlang der Erstchip-Ebene E₁₂ verläuft - vorzugsweise, nicht aber notwendigerweise parallel zur Erstchip-Ebene E₁₂ - und von der Erstchip-Rückseite R₁₂ beabstandet ist. Ein Abstand h₀ zwischen der ersten Kompensationselektrode 26 im Erstelektroden-Rücksprungabschnitt 39 und der ersten Gleichspannungselektrode 22 ist damit kleiner als eine Substratdicke D₁₂ = b₁+h₀ mit einer Rücksprunghöhe b₁. Der Rücksprung 39 hat eine Rücksprungtiefe b₂.

Zwischen der ersten Kompensationselektrode 26 und der ersten Gleichspannungselektrode 22 ist ein Isolationsstreifen 40 ausgebildet, in dem ein Substrat 42 des ersten Chips 12 keine Metallisierung aufweist. Der Isolationsstreifen 40 kann einen Isolationsstreifen-Abstand δ von der Kantenfläche 36 haben. Optional kann - wie in der vorliegenden Ausführungsform - der Isolationsstreifen 40 zwischen dem Erstelektroden-Rücksprungabschnitt 39 und einem Rücksprungabschnitt 41 der ersten Gleichspannungselektrode 22 verlaufen. Der Rücksprungabschnitt 41 verläuft entlang der Erstchip-Ebene E₁₂ und beabstandet von der Erstchip-Rückseite R₁₂ und vorzugsweise in gleichem Abstand zur Erstchip-Rückseite R₁₂ wie der Erstelektroden-Rücksprungabschnitt 39. Der Rücksprung 38 kann jedoch auch eine andere Form haben als die in Figur 1a dargestellte.

Von dem Fallenvolumen V ausgesehen verdeckt die erste Gleichspannungselektrode 22 gemäß einer bevorzugten Ausführungsform den Isolationsstreifen 40.

Die zweite Kompensationselektrode 32 kann ebenfalls einen Rücksprung aufweisen. Dieser ist vorzugsweise wie der Rücksprung 39 ausgebildet. Der zweite Chip 16 hat vorzugsweise, nicht aber notwendigerweise, die in der Vergrößerung gezeigte Struktur, wobei dann die zweite Kompensationselektrode 32 der ersten Kompensationselektrode 26 entspricht und die zweite Gleichspannungselektrode 30 der ersten Gleichspannungselektrode 22.

Emittiert das Ion 24 im Fallenvolumen V ein Photon 44, so kann dieses von einem Fotodetektor 44 aufgenommen werden, wenn es unter einem Öffnungswinkel α abgestrahlt wird. Ein zweiter Fototdetektor für Licht, das in die Gegenrichtung emittiert wird, ist nicht eingezeichnet.

Figur 1b zeigt, dass der erste Chip 12 ein zweites Erstchip-Segment S1.2 und gegebenenfalls zumindest ein drittes Erstchip-Segment S1.3 aufweisen kann. Die Erstchip-Segmente S1.i (i=1, 2,.. N) sind nebeneinander entlang der Schlitz-Erstreckungsrichtung R₂₀ angeordnet. Es ist günstig, wenn die Erstchip-Segmente S1.i gleich aufgebaut sind.

Die Erstchip-Hochfrequenzelektrode 28 kann Zungen 46.i aufweisen, die jeweils gegenüber dem Erstchip-Segment S1.i angeordnet sind und sich jeweils in eine Segment-Erstreckungsrichtung Rs erstrecken.

Figur 2 zeigt den zweiten Chip 16, der wie der erste Chip 12 aufgebaut ist und Zweitchip-Segmente S2.i aufweist. Jedes Zweitchip-Segment S2.i ist auf gleicher Höhe entlang der Schlitz-Erstreckungsrichtung R₂₀ angeordnet sind wie das korrespondierende Erstchip-Segment S1.i.

Figur 1a zeigt schematisch neben dem Fotodetektor 44 eine Steuereinheit 48, die mit den Elektroden verbunden ist und diese mit der jeweiligen Spannung beaufschlagt und Teil eines Ionenfallensystems 52 ist. Mittels eines Prozessors 50 der Steuereinheit 48 werden die Spannungen beispielsweise gemäß eines vorgegebenen Programms gesteuert.

**Bezugszeichen**

| | | | |
|---|---|---|---|
| 10 | Ionenfalle | E₁₂ | Erstchip-Ebene |
| 12 | erster Chip | E₁₆ | Zweitchip-Ebene |
| 14 | Erstchip-Schlitz | F₁₂ | Erstchip-Frontseite |
| 16 | zweiter Chip | F₁₆ | Zweitchip-Frontseite |
| 18 | Zweitchip-Schlitz | h₀ | Abstand |
| 20 | Schlitz | i | Zählindex |
| 22 | erste Gleichspannungselektrode (U_{DC1,1}) | N P | Normale Photon |
| 24 | Ion | R12 | Erstchip-Rückseite |
| 26 | erste Kompensationselektrode (U_{DC2,1}) | R₁₆ R₂₀ | Zweitchip-Rückseite Schlitz-Erstreckungsrichtung |
| 28 | Erstchip-Hochfrequenzelektrode | R_{S} | Segment-Erstreckungsrichtung |
| 30 | zweite Gleichspannungselektrode (U_{DC3,1}) | S_{1.i} S_{2.1} | i-tes Erstchip-Segment Zweitchip-Segment |
| 32 | zweite Kompensationselektrode (U_{DC4,1}) | U_{DC1,1} U_{DC2,1} | erste Gleichspannung zweite Gleichspannung |
| 34 | Zweitchip-Hochfrequenzelektrode | U_{DC3,1} | dritte Gleichspannung |
| 36 | Kantenfläche | U_{DC4,1} | vierte Gleichspannung |
| 38 | Rücksprung | U₁ | erste Uferseite |
| 39 | Erstelektroden-Rücksprungabschnitt | U₂ U_{RF} | zweite Uferseite Hochfrequenzspannung (Ra- |
| 40 | Isolationsstreifen | | diofrequenz) |
| 41 | Rücksprungabschnitt | V | Fallenvolumen |
| 42 | Substrat | | |
| 44 | Fotodetektor | | |
| 46 | Zunge | | |
| 48 | Steuereinheit | | |
| 50 | Prozessor | | |
| 52 | Ionenfallensystem | | |
| α | Akzeptanzwinkel | | |
| δ | Isolationsstreifen-Abstand | | |
| b₁ | Rücksprunghöhe | | |
| b₂ | Rücksprungtiefe | | |
| D₁₂ | Substrat-Dicke | | |

## Patentansprüche

1. Ionenfalle (10) mit
(a) einem ersten Chip (12), der
(i) eine Erstchip-Frontseite (F₁₂) und eine Erstchip-Rückseite (R₁₂) hat und
(ii) einen Erstchip-Schlitz (14) aufweist,
(b) einem zweiten Chip (16), der
(i) eine Zweitchip-Frontseite (F₁₆) und eine Zweitchip-Rückseite (R₁₆) hat,
(ii) einen Zweitchip-Schlitz (18) aufweist und
(iii) so am ersten Chip (12) befestigt ist, dass in senkrechter Projektion auf eine Erstchip-Ebene (E₁₂), entlang der sich der erste Chip (12) erstreckt, ein Schlitz (20) der Ionenfalle (10) entsteht,
(c) wobei der erste Chip (12) ein Erstchip-Segment (S_{1.1}) aufweist, in dem der erste Chip (12) eine erste Gleichspannungselektrode (22) aufweist, die
- zumindest auch auf der Erstchip-Rückseite (R₁₂) angeordnet ist,
- sich zumindest abschnittsweise entlang der Erstchip-Ebene (E₁₂) erstreckt,
- zum Anlegen einer ersten Gleichspannung (U_{DC1,1}) ausgebildet ist,
- auf einer ersten Uferseite (U₁) bezüglich des Erstchip-Schlitzes (14) angeordnet ist und
- an den Schlitz (20) angrenzt, und
(d) wobei der erste Chip (12) eine Erstchip-Hochfrequenzelektrode (28) aufweist, die
(i) auf einer der ersten Uferseite (U₁) bezüglich des Erstchip-Schlitzes (14) gegenüberliegenden zweiten Uferseite (U₂) angeordnet ist und
(ii) zum Anlegen einer Hochfrequenzspannung (U_{RF}) ausgebildet ist,
(e) wobei der zweite Chip (16)
(i) ein Zweitchip-Segment (S_{2.1}), das in Richtung einer Normalen (N) auf die Erstchip-Ebene hinter der Erstchip-Hochfrequenzelektrode (28) liegt aufweist, in dem der zweite Chip eine zweite Gleichspannungselektrode (30) aufweist, die
- zumindest auch auf der Zweitchip-Frontseite (F₁₆) angeordnet ist,
- sich zumindest abschnittsweise entlang einer Zweitchip-Ebene (E₁₆), entlang der sich der zweite Chip (16) erstreckt, erstreckt und zum
- Anlegen einer dritten Gleichspannung (U_{DC3,1}) ausgebildet ist, und
(f) wobei der zweite Chip (16) eine Zweitchip-Hochfrequenzelektrode (34) aufweist, die in Richtung der Normalen (N) auf die Erstchip-Ebene (E₁₂) hinter dem Erstchip-Segment (S_{1.1}) liegt;
wobei die Gleichspannungselektroden so angeordnet sind, dass im Betrieb durch Anlegen geeigneter Gleichspannungen Ionen im Fallenvolumen gefangen und gehalten werden können, wenn eine geeignete Hochfrequenzspannung an den Hochfrequenzelektroden anliegt;
**dadurch gekennzeichnet, dass**
(g) der erste Chip (12) im Erstchip-Segment (S_{1.1}) eine erste Kompensationselektrode (26) aufweist, die
- zumindest auch auf der Erstchip-Frontseite (F₁₂) angeordnet ist,
- sich zumindest abschnittsweise entlang der Erstchip-Ebene (E₁₂) erstreckt,
- zum Anlegen im Betrieb einer zweiten Gleichspannung (U_{DC2,1}) ausgebildet ist und
- auf der ersten Uferseite (U₁) bezüglich des Erstchip-Schlitzes (14) angeordnet ist,
(h) der zweite Chip (16) im Zweitchip-Segment eine zweite Kompensationselektrode (32) aufweist die
- zumindest auch auf der Zweitchip-Rückseite (R₁₆) angeordnet ist,
- sich zumindest abschnittsweise entlang der Zweitchip-Ebene (E₁₆) erstreckt und
- zum Anlegen im Betrieb einer vierten Gleichspannung (U_{DC4,1}) ausgebildet ist,
(i) die Erstchip-Hochfrequenzelektrode (28) gegenüber der ersten Kompensationselektrode (26) angeordnet ist,
(j) alle Kompensationselektroden (26, 32) gegeneinander elektrisch isoliert sind und
(k) wobei die Erstchip-Frontseite in die gleiche Richtung zeigt wie die Zweitchip-Frontseite.

2. Ionenfalle (10) nach Anspruch 1, **dadurch gekennzeichnet, dass**
das Erstchip-Segment (S_{1.1})
(a) an einer benachbart zum Erstchip-Schlitz (14) liegenden, quer zur Erstchip-Ebene (E₁₂) verlaufenden Kantenfläche (36) einen Rücksprung (38) aufweist, und
(b) die erste Kompensationselektrode (26)
einen Erstelektroden-Rücksprungabschnitt (39) hat, der entlang der Erstchip-Ebene (E₁₂) verläuft und von der Erstchip-Rückseite (R₁₂) und der Erstchip-Frontseite (F₁₂) beabstandet ist.

3. Ionenfalle (10) nach Anspruch 2, **dadurch gekennzeichnet, dass**
(a) die erste Gleichspannungselektrode (22) in einem Rücksprungabschnitt (41) entlang der Erstchip-Ebene (E₁₂) und beabstandet von der Erstchip-Rückseite (R₁₂) verläuft und
(b) zwischen dem Erstelektroden-Rücksprungabschnitt (39) und dem Rücksprungabschnitt (41) ein Isolationsstreifen (40) ausgebildet ist.

4. Ionenfalle (10) nach einem der vorstehenden Ansprüche, **dadurch gekennzeichnet, dass**
(a) das Erstchip-Segment (S_{1.1}) zungenförmig ist und sich in einer Segment-Erstreckungsrichtung (R_{S}) erstreckt, die quer zu einer Schlitz-Erstreckungsrichtung (R₂₀) verläuft, entlang der sich der Erstchip-Schlitz (14) erstreckt und/oder
(b) das Zweitchip-Segment (S_{2.1}) zungenförmig ist und sich in einer Segment-Erstreckungsrichtung (R_{S}) erstreckt, die quer zu einer Schlitz-Erstreckungsrichtung (R₂₀) verläuft, entlang der sich der Zweitchip-Schlitz (18) erstreckt.

5. Ionenfalle (10) nach einem der Ansprüche 3 oder 4, **dadurch gekennzeichnet, dass** ein Abstand (h₀) zwischen dem Rücksprungabschnitt (41) und der Erstchip-Rückseite (R₁₂) kleiner ist als das 0,7-fache einer Substrat-Dicke (D₁₂) des ersten Chips (12).

6. Ionenfalle (10) nach einem der Ansprüche 2 bis 5, **dadurch gekennzeichnet, dass** der Rücksprung (38) so ausgebildet ist, dass die erste Kompensationselektrode (26) von einem Fallenvolumen (V) der Ionenfalle (10) aus gesehen von der ersten Gleichspannungselektrode (22) verdeckt ist.

7. Ionenfalle (10) nach Anspruch 6, **dadurch gekennzeichnet, dass** der Sinus des halben Öffnungswinkels (α/2) eines Kegels, dessen Spitze im Zentrum des Fallenvolumens (V) liegt und der die Ionenfalle (10) nicht schneidet, zumindest 0,45, insbesondere zumindest 0,5, beträgt.

8. Ionenfalle (10) nach einem der vorstehenden Ansprüche, **dadurch gekennzeichnet, dass**
ein lichter Chip-Abstand (d₁) der beiden Chips (12, 16) voneinander um höchstens 15% von einer Erstschlitzbreite (d_{2,1})des Erstchip-Schlitzes (14) und/oder von einer Zweitschlitzbreite (d_{2,2}) des Zweitchip-Schlitzes (18) abweicht.

9. Ionenfalle (10) nach einem der vorstehenden Ansprüche, **dadurch gekennzeichnet, dass**
der erste Chip (12) zumindest ein zweites Erstchip-Segment (S_{1.2}) aufweist, das bezüglich der Schlitz-Erstreckungsrichtung (R₂₀) neben dem ersten Erstchip-Segment (S_{1.1}) ausgebildet ist und
wie das erste Erstchip-Segment (S_{1.1}) aufgebaut ist.

10. Ionenfalle (10) nach einem der vorstehenden Ansprüche, **dadurch gekennzeichnet, dass**
(a) der erste Chip (12) zumindest drei Erstchip-Segmente (S_{1.1}, S_{1.2}, S_{1.3}) aufweist, die nebeneinander entlang des Erstchip-Schlitzes (14) angeordnet sind, und/oder
(b) der zweite Chip (16) zumindest drei Zweitchip-Segmente (S_{2.1}, S_{2.2}, S_{2.3}) aufweist, die nebeneinander entlang des Zweitchip-Schlitzes (18) angeordnet sind.

11. Ionenfallensystem (52) mit
(a) einer Ionenfalle (10) nach einem der vorstehenden Ansprüche und
(b) einer Steuereinheit (48), die
(i) elektrisch mit den Elektroden (22, 26, 28, 30, 32, 34) verbunden ist und
(ii) ausgebildet ist zum automatischen Anlegen
einer Hochfrequenzspannung (U_{RF}) an die Hochfrequenzelektroden (28, 34), sodass sich das Fallenvolumen (V) bildet und
jeweils einer vorgegebenen Gleichspannung an jede Kompensationselektrode (26, 32) und/oder Gleichspannungselektrode (22, 30).

12. Ionenfallensystem nach Anspruch 11, **gekennzeichnet durch** einen Fotodetektor (44), der angeordnet ist zum Erfassen von Photonen (P), die vom im Fallenvolumen (V) angeordneten Ion (24) emittiert wird.

## Claims

1. An ion trap (10) with
(a) a first chip (12) which
(i) has a first-chip front side (F₁₂) and a first-chip reverse side (R₁₂) and
(ii) comprises a first-chip slot (14),
(b) a second chip (16) which
(i) has a second-chip front side (F₁₆) and a second-chip reverse side (R₁₆),
(ii) comprises a second-chip slot (18) and
(iii) is fixed to the first chip (12) in such a way that a slot (20) of the ion trap (10) is formed in vertical projection onto a first-chip plane (E₁₂), along which the first chip (12) extends,
(c) wherein the first chip (12) comprises a first-chip segment (S_{1.1}) in which the first chip (12) comprises a first DC voltage electrode (22) which
- is at least also arranged on the first-chip reverse side (R₁₂),
- extends at least in sections along the first-chip plane (E₁₂),
- is designed to apply a first DC voltage (U_{DC1,1}),
- is arranged on a first edge side (U₁) with respect to the first-chip slot (14) and
- abuts the slot (20), and
(d) wherein the first chip (12) comprises a first-chip high-frequency electrode (28), which
(i) is arranged on second edge side (U₂) opposite the first edge side (U₁) with respect to the first-chip slot (₁₄) and
(ii) is designed to apply a high-frequency voltage (U _{RF}),
(e) wherein the second chip (16) comprises
(i) a second-chip segment (S_{2.1}) located downstream of the first-chip high-frequency electrode (28) in the direction of a normal (N) to the first-chip plane, in which the second chip comprises a second DC voltage electrode (30) which
- is at least also arranged on the second-chip front side (F₁₆),
- extends at least in sections along a second-chip plane (E₁₆), along which the second chip (16) extends, and
- is designed to apply a third DC voltage (U_{DC3,1}), and
(f) wherein the second chip (16) comprises a second-chip high-frequency electrode (34) located downstream of the first-chip segment (S_{1.1}) in the direction of the normal (N) to the first-chip plane (E₁₂)
wherein the DC voltage electrodes are arranged in such a way that during operation, by applying suitable DC voltages, ions can be trapped and held in a trap volume when a suitable high-frequency voltage acts on the high-frequency electrodes;
**characterised in that**
(g) the first chip (12) comprises a first compensation electrode (26) in the first-chip segment (S_{1.1}) which
- is at least also arranged on the first-chip front side (R₁₂),
- extends at least in sections along the first-chip plane (E₁₂),
- is designed to apply a second DC voltage (U_{DC2,1}) during operation and
- is arranged on the first edge side (U₁) with respect to the first-chip slot (14),
(h) the second chip (16) comprises a second compensation electrode (32) in the second-chip segment, which
- is at least also arranged on the second-chip reverse side (R₁₆),
- extends at least in sections along the second-chip plane (E₁₆) and
- is designed to apply a fourth DC voltage (U_{DC4,1}) during operation,
(i) the first-chip high-frequency electrode (28) is arranged opposite the first compensation electrode (26),
(j) all compensation electrodes (26, 32) are electrically insulated against each other and
(k) wherein the first-chip front side points in the same direction as the second-chip front side.

2. The ion trap (10) according to claim 1, **characterised in that**
the first-chip segment (S_{1.1})
(a) has a recess (38) on an edge surface (36) that is adjacent to the first-chip slot (14) and extends transversely to the first-chip plane (E₁₂), and
(b) the first compensation electrode (26)
has a first-electrode recess section (39) that extends along the first-chip plane (E₁₂) and is spaced apart from the first-chip reverse side (R₁₂) and the first-chip front side (F₁₂).

3. The ion trap (10) according to claim 2, **characterised in that**
(a) the first DC voltage electrode (22) extends along the first-chip plane (E₁₂) in a recess section (41) and is spaced apart from the first-chip reverse side (R₁₂) and
(b) there is an insulating strip (40) between the first-electrode recess section (39) and the recess section (41).

4. The ion trap (10) according to one of the preceding claims, **characterised in that**
(a) the first-chip segment (S_{1.1}) is tongue-shaped and extends in a segment extension direction (R_{S}) that extends transversely to a slot extension direction (R₂₀) along which the first-chip slot (14) extends and/or
(b) the second-chip segment (S_{2.1}) is tongue-shaped and extends in a segment extension direction (R_{S}) that extends transversely to a slot extension direction (R₂₀) along which the second-chip slot (18) extends.

5. The ion trap (10) according to one of the preceding claims 3 or 4, **characterised in that** a distance (h₀) between the recess section (41) and the first-chip reverse side (R₁₂) is smaller than 0.7 times a substrate thickness (D₁₂) of the first chip (12).

6. The ion trap (10) according to one of the claims 2 to 5, **characterised in that** the recess (38) is designed in such a way that the first compensation electrode (26) is covered by the first DC voltage electrode (22), as viewed from a trap volume (V) of the ion trap (10).

7. The ion trap (10) according to claim 6, **characterised in that** the sine of half the opening angle (α/2) of a cone whose tip lies in the centre of the trap volume (V) and which does not intersect the ion trap (10) is at least 0.45 in particular at least 0.5.

8. The ion trap (10) according to one of the preceding claims, **characterised in that** a clear chip distance (d₁) of the two chips (12, 16) from each other deviates by at most 15% from a first slot width (d_{2,1}) of the first-chip slot (14) and/or from a second slot width (d_{2,2}) of the second-chip slot (18).

9. The ion trap (10) according to one of the preceding claims, **characterised in that**
the first chip (12) comprises at least a second first-chip segment (S_{1.2}),
which is configured next to the first-chip segment (S_{1.1}) with respect to the slot extension direction (R₂₀) and
is constructed in the same way as the first-chip segment (S_{1.1}).

10. The ion trap (10) according to one of the preceding claims, **characterised in that**
(a) the first chip (12) comprises at least three first-chip segments (S_{1.1}, S_{1.2}, S_{1.3}) that are arranged next to each other along the first-chip slot (14), and/or
(b) the second chip (16) comprises at least three second-chip segments (S_{2.1}, S_{2.2}, S_{2.3}) that are arranged next to each other along the second-chip slot (18).

11. An ion trap system (52) with
(a) an ion trap (10) according to one of the preceding claims and
(b) a control unit (48) which
(i) is electrically connected to the electrodes (22, 26, 28, 30, 32, 34) and
(ii) is configured to automatically apply
a high-frequency voltage (U_{RF}) to the high-frequency electrodes (28, 34), thereby forming the trap volume (V), and
in each case, a predetermined DC voltage on each compensation electrode (26, 32) and/or DC voltage electrode (22, 30).

12. The ion trap system according to claim 11, **characterised by** a photodetector (44) which is arranged to detect photons (P) emitted by an ion (24) arranged in the trap volume (V).

## Revendications

1. Piège à ions (10) comprenant
(a) une première puce (12) qui présente
(i) une face avant (F₁₂) de première puce et une face arrière (R₁₂) de première puce et
(ii) une fente (14) de première puce,
(b) une deuxième puce (16) qui présente
(i) une face avant (F₁₆) de deuxième puce et une face arrière (R₁₆) de deuxième puce,
(ii) une fente (18) de deuxième puce
(iii) et qui est fixée à la première puce (12) de telle sorte qu'une fente (20) du piège à ions (10) est formée en projection verticale sur un plan (E₁₂) de première puce le long duquel s'étend la première puce (12),
(c) la première puce (12) comportant un segment (S_{1.1}) de première puce dans lequel la première puce (12) présente une première électrode à tension continue (22) qui
- est disposée au moins également sur la face arrière (R₁₂) de première puce,
- s'étend au moins localement le long du plan (E₁₂) de première puce,
- est conçue pour appliquer une première tension continue (U_{DC1,1}),
- est disposée sur un premier côté de bord (U₁) par rapport à la fente (14) de première puce et
- est adjacente à la fente (20), et
(d) la première puce (12) comportant une électrode haute fréquence (28) de première puce qui
(i) est disposée sur un deuxième côté de bord (U₂) opposé au premier côté de bord (U₁) par rapport à la fente (14) de première puce, et
(ii) est conçue pour appliquer une tension haute fréquence (U_{RF}),
(e) la deuxième puce (16)
(i) comprenant un segment (S_{2.1}) de deuxième puce qui est situé derrière l'électrode haute fréquence (28) de première puce dans la direction d'une normale (N) au plan de première puce, segment dans lequel la deuxième puce comporte une deuxième électrode à tension continue (30) qui
- est disposée au moins également sur la face avant (F₁₆) de deuxième puce,
- s'étend au moins localement le long d'un plan (E₁₆) de deuxième puce le long duquel s'étend la deuxième puce (16) et
- est conçue pour appliquer une troisième tension continue (U_{DC3,1}), et
(f) la deuxième puce (16) comportant une électrode haute fréquence (34) de deuxième puce qui est située derrière le segment (S_{1.1}) de première puce dans la direction de la normale (N) au plan (E₁₂) de première puce ;
les électrodes à tension continue étant disposées de telle sorte que des ions peuvent être piégés et retenus par application de tensions continues appropriées pendant le fonctionnement, lorsqu'une tension haute fréquence appropriée est appliquée aux électrodes haute fréquence ;
**caractérisé en ce que**
(g) la première puce (12) comporte, dans le segment (S_{1.1}) de première puce, une première électrode de compensation (26) qui
- est disposée au moins également sur la face avant (F₁₂) de première puce,
- s'étend au moins localement le long du plan (E₁₂) de première puce,
- est conçue pour appliquer une deuxième tension continue (U_{DC2,1}) pendant le fonctionnement et
- est disposée sur le premier côté de bord (U₁) par rapport à la fente (14) de première puce,
(h) la deuxième puce (16) comporte, dans le segment de deuxième puce, une deuxième électrode de compensation (32) qui
- est disposée au moins également sur la face arrière (R₁₆) de deuxième puce,
- s'étend au moins localement le long du plan (E₁₆) de deuxième puce et
- est conçue pour appliquer une quatrième tension continue (U_{DC4,1}) pendant le fonctionnement,
(i) l'électrode haute fréquence (28) de première puce est disposée à l'opposé de la première électrode de compensation (26),
(j) toutes les électrodes de compensation (26, 32) sont isolées électriquement les unes des autres, et
(k) la face avant de la première puce est orientée dans la même direction que la face avant de la deuxième puce.

2. Piège à ions (10) selon la revendication 1, **caractérisé en ce que**
le segment (S_{1.1}) de première puce
(a) présente un retrait (38) sur une surface de chant (36) qui est adjacente à la fente (14) de première puce et s'étend transversalement au plan (E₁₂) de première puce, et
(b) la première électrode de compensation (26)
présente une partie en retrait (39) de première électrode qui s'étend le long du plan (E₁₂) de première puce et qui est espacée de la face arrière (R₁₂) de première puce et de la face avant (F₁₂) de première puce.

3. Piège à ions (10) selon la revendication 2, **caractérisé en ce que**
(a) la première électrode à tension continue (22) s'étend dans une partie en retrait (41) le long du plan (E₁₂) de première puce et à distance de la face arrière (R₁₂) de première puce, et
(b) une bande isolante (40) est formée entre la partie en retrait (39) de première électrode et la partie en retrait (41).

4. Piège à ions (10) selon l'une des revendications précédentes, **caractérisé en ce que**
(a) le segment (S_{1.1}) de première puce est en forme de languette et s'étend dans une direction d'extension de segment (R_{S}) qui s'étend transversalement à une direction d'extension de fente (R₂₀) le long de laquelle s'étend la fente (14) de première puce, et/ou
(b) le segment (S_{2.1}) de deuxième puce est en forme de languette et s'étend dans une direction d'extension de segment (R_{S}) qui s'étend transversalement à une direction d'extension de fente (R₂₀) le long de laquelle s'étend la fente (18) de deuxième puce.

5. Piège à ions (10) selon l'une des revendications 3 ou 4, **caractérisé en ce qu'**une distance (h₀) entre la partie en retrait (41) et la face arrière (R₁₂) de première puce est inférieure à 0,7 fois l'épaisseur (D₁₂) du substrat de la première puce (12).

6. Piège à ions (10) selon l'une des revendications 2 à 5, **caractérisé en ce que** le retrait (38) est conçu de telle sorte que la première électrode de compensation (26) est masquée par la première électrode à tension continue (22), vue depuis un volume de piégeage (V) du piège à ions (10).

7. Piège à ions (10) selon la revendication 6, **caractérisé en ce que** le sinus du demi-angle d'ouverture (α/2) d'un cône dont le sommet se trouve au centre du volume de piégeage (V) et qui ne coupe pas le piège à ions (10) est d'au moins 0,45, en particulier d'au moins 0,5.

8. Piège à ions (10) selon l'une des revendications précédentes, **caractérisé en ce que** la distance libre (d₁) des deux puces (12, 16) l'une par rapport à l'autre s'écarte au maximum de 15 % d'une largeur (d_{2,1}) de la fente (14) de première puce et/ou d'une largeur (d_{2,2}) de la fente (18) de deuxième puce.

9. Piège à ions (10) selon l'une des revendications précédentes, **caractérisé en ce que** la première puce (12) comporte au moins un deuxième segment (S_{1.2}) de première puce qui est formé à côté du premier segment (S_{1.1}) de première puce par rapport à la direction d'extension de fente (R₂₀) et
qui est conçu de la même manière que le premier segment (S_{1.1}) de première puce.

10. Piège à ions (10) selon l'une des revendications précédentes, **caractérisé en ce que**
(a) la première puce (12) comporte au moins trois segments (S_{1.1}, S_{1.2}, S_{1.3}) de première puce qui sont disposés les uns à côté des autres le long de la fente (14) de première puce, et/ou
(b) la deuxième puce (16) comporte au moins trois segments (S_{2.1}, S_{2.2}, S_{2.3}) de deuxième puce qui sont disposés les uns à côté des autres le long de la fente (18) de deuxième puce.

11. Système de piège à ions (52) comprenant
(a) un piège à ions (10) selon l'une des revendications précédentes et
(b) une unité de commande (48) qui
(i) est reliée électriquement aux électrodes (22, 26, 28, 30, 32, 34) et
(ii) est conçue pour appliquer automatiquement
une tension haute fréquence (U_{RF}) aux électrodes haute fréquence (28, 34), de manière à former le volume de piégeage (V), et
une tension continue prédéfinie à chaque électrode de compensation (26, 32) et/ou électrode à tension continue (22, 30).

12. Système de piège à ions selon la revendication 11, **caractérisé par** un photodétecteur (44) agencé pour détecter des photons (P) qui sont émis par l'ion (24) disposé dans le volume de piégeage (V).
